(19) Europäisches Patentamt
European Patent Office
Office européen des brevets

(11) **EP 3 115 577 A1**

(12) **EUROPEAN PATENT APPLICATION**

(43) Date of publication:
**11.01.2017 Bulletin 2017/02**

(51) Int Cl.:
*F02C 7/36* (2006.01)    *F01D 15/12* (2006.01)
*F02C 3/107* (2006.01)

(21) Application number: **16178716.3**

(22) Date of filing: **08.07.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **10.07.2015 US 201514795911**

(71) Applicants:
• **United Technologies Corporation**
  **Farmington, CT 06032 (US)**

• **MTU Aero Engines AG**
  **80995 München (DE)**

(72) Inventors:
• **MORIN, Bruce L.**
  **Longmeadow, MA 01106 (US)**
• **KORTE, Detlef**
  **85757 Karlsfeld (DE)**

(74) Representative: **Hull, James Edward**
  **Dehns**
  **St. Bride's House**
  **10 Salisbury Square**
  **London**
  **EC4Y 8JD (GB)**

(54) **LOW NOISE TURBINE FOR GEARED TURBOFAN ENGINE**

(57)    A gas turbine engine comprises a fan (202), a compressor section including a compressor having a low pressure portion (210) and a high pressure portion (214), a combustor section (218), and a turbine having a downstream portion (208). A gear reduction (204) effects a reduction in the speed of the fan (202) relative to an input speed to the fan (202). The downstream portion (208) of the turbine has a number of turbine blades in each of a plurality of rows of the downstream turbine portion (208). The turbine blades operate at least some of the time at a rotational speed. The number of blades and the rotational speed are such that the following formula holds true for at least one of the blade rows of the downstream turbine: (number of blades × speed)/60≧5500. The rotational speed is an approach speed in revolutions per minute. A method of designing a gas turbine engine and a turbine module are also disclosed.

FIG.2

**Description**

**BACKGROUND**

This application relates to the design of a turbine which can be operated to produce noise to which human hearing is less sensitive.

Gas turbine engines are known, and typically include a fan delivering air into a compressor. The air is compressed in the compressor and delivered downstream into a combustor section where it was mixed with fuel and ignited. Products of this combustion pass downstream over turbine rotors, driving the turbine rotors to rotate.

Typically, there is a high pressure turbine rotor, and a low pressure turbine rotor. Each of the turbine rotors includes a number of rows of turbine blades which rotate with the rotor. Typically interspersed between the rows of turbine blades are vanes.

The low pressure turbine can be a significant noise source, as noise is produced by fluid dynamic interaction between the blade rows and the vane rows. These interactions produce tones at a blade passage frequency of each of the low pressure turbine stages, and their harmonics.

The noise can often be in a frequency range to which humans are very sensitive. To mitigate this problem, in the past, a vane-to-blade ratio of the fan drive turbine has been controlled to be above a certain number. As an example, a vane-to-blade ratio may be selected to be 1.5 or greater, to prevent a fundamental blade passage tone from propagating to the far field. This is known as acoustic "cut-off."

However, acoustically cut-off designs may come at the expense of increased weight and reduced aerodynamic efficiency. Stated another way, if limited to a particular vane to blade ratio, the designer may be restricted from selecting such a ratio based upon other characteristics of the intended engine.

Historically, the low pressure turbine has driven both a low pressure compressor section and a fan section. More recently, a gear reduction has been provided such that the fan and low pressure compressor can be driven at different speeds.

SUMMARY

In a featured embodiment, a gas turbine engine comprises a fan, a compressor section including a compressor having a low pressure portion and a high pressure portion, a combustor section, and a turbine having a downstream portion. A gear reduction effects a reduction in the speed of the fan relative to an input speed to the fan. The downstream portion of the turbine has a number of turbine blades in each of a plurality of rows of the downstream turbine portion. The turbine blades operate at least some of the time at a rotational speed. The number of blades and the rotational speed are such that the following formula holds true for at least one of the blade rows of the downstream turbine: (number of blades $\times$ speed)/60 $\geqq$ 5500. The rotational speed is an approach speed in revolutions per minute.

In another embodiment according to the previous embodiment, the formula results in a number greater than or equal to 6000.

In another embodiment according to any of the previous embodiments, the gas turbine engine is rated to produce 15,000 pounds (6,800 kg) of thrust or more.

In another embodiment according to any of the previous embodiments, the formula holds true for the majority of blade rows of the downstream turbine.

In another embodiment according to any of the previous embodiments, the formula holds true for all of the blade rows of the downstream turbine.

In another embodiment according to any of the previous embodiments, the formula holds true for the majority of the blade rows of the downstream turbine.

In another embodiment according to any of the previous embodiments, the formula holds true for all of the blade rows of the downstream turbine.

In another featured embodiment, a method of designing a gas turbine engine comprises the steps of including a gear reduction between a turbine portion and a fan, and selecting the number of blades in each row of the turbine portion, in combination with the rotational speed of the turbine portion, such that the following formula holds true for at least one of the blade rows of the low pressure turbine portion: (number of blades $\times$ speed)/60 $\geqq$ 5500. The rotational speed is an approach speed in revolutions per minute.

In another embodiment according to the previous embodiment, the formula results in a number greater than or equal to 6000.

In another embodiment according to any of the previous embodiments, the gas turbine engine is rated to produce 15,000 pounds (6,800 kg) of thrust or more.

In another embodiment according to any of the previous embodiments, the formula holds true for the majority of the blade rows of the turbine portion.

In another embodiment according to any of the previous embodiments, the formula holds true for all of the blade rows of the turbine portion.

In another embodiment according to any of the previous embodiments, the formula holds true for the majority of the blade rows of the turbine portion.

In another embodiment according to any of the previous embodiments, the formula holds true for all of the blade rows of the turbine portion.

In another featured embodiment, a turbine module comprises a turbine portion having a number of turbine blades in each of a plurality of rows of the turbine portion. The turbine portion operates at least some of the time at a rotational speed, and the number of blades and the rotational speed are such that the following formula holds true for at least one of the blade rows of the turbine portion: (number of blades $\times$ speed)/60$\geqq$5500. The rotational speed is an approach speed in revolutions per minute.

In another embodiment according to the previous embodiment, the formula results in a number greater than or equal to 6000.

In another embodiment according to any of the previous embodiments, the gas turbine engine is rated to produce 15,000 pounds (6,800 kg) of thrust or more.

In another embodiment according to any of the previous embodiments, the formula holds true for the majority of blade rows of the turbine portion.

In another embodiment according to any of the previous embodiments, the formula holds true for all of the blade rows of the turbine portion.

In another embodiment according to any of the previous embodiments, the formula holds true for the majority of the blade rows of the turbine portion.

In another embodiment according to any of the previous embodiments, there are three turbine rotors, and the turbine portion is the most downstream of the three turbine rotors.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

## BRIEF DESCRIPTION OF THE DRAWINGS

Figure 1 shows a gas turbine engine.
Figure 2 shows another embodiment.
Figure 3 shows yet another embodiment.

## DETAILED DESCRIPTION

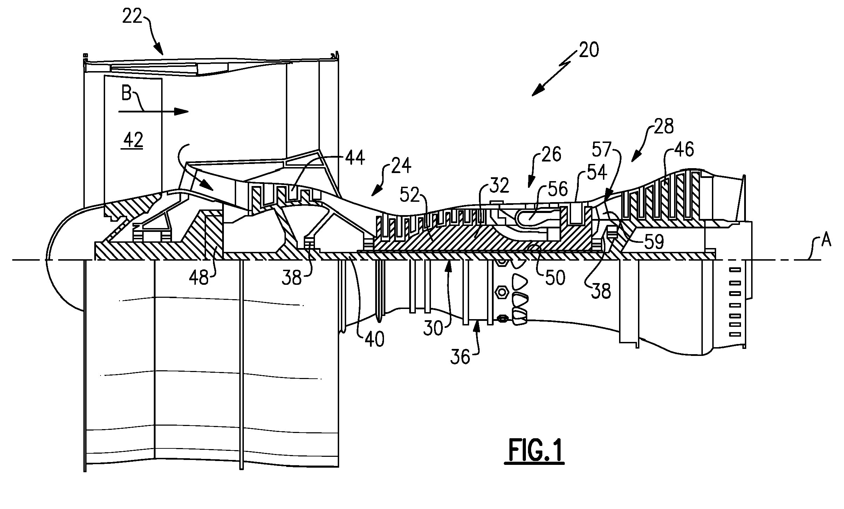

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown), or an intermediate spool, among other systems or features. The fan section 22 drives air along a bypass flowpath B while the compressor section 24 drives air along a core flowpath C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path. The turbines 46, 54 rotationally drive the respective low speed spool 30 and high speed spool 32 in response to the expansion.

The terms "low" and "high" as applied to speed or pressure for the spools, compressors and turbines are of course relative to each other. That is, the low speed spool operates at a lower speed than the high speed spool, and the low pressure sections operate at lower pressure than the high pressures sections.

The engine 20 in one example is a high-bypass geared aircraft engine. In a further example, the engine 20 bypass ratio is greater than about six, with an example embodiment being greater than ten, the geared architecture 48 is an epicyclic gear train, such as a star system, a planetary gear system or other gear system, with a gear reduction ratio of greater than about 2.3:1 or greater than about 2.5:1. In one disclosed embodiment, the engine 20 bypass ratio is greater than about ten, the fan diameter is significantly larger than that of the low pressure compressor 44, and the low pressure turbine 46 has a pressure ratio that is greater than about 5:1. The low pressure turbine 46 pressure ratio is a ratio of the pressure measured at inlet of low pressure turbine 46 to the pressure at the outlet of the low pressure turbine 46 (prior to an exhaust nozzle). It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.50 and, in some embodiments, is less than about 1.45. "Low corrected fan tip speed" is the actual fan tip speed in ft/sec divided by an industry standard temperature correction of $[(Tambient\ deg\ R)/518.7]^{0.5}$. The "Low corrected fan tip speed" as disclosed herein according to one non-limiting embodiment is less than about 1150 ft / second (350.5 m/g).

The use of the gear reduction between the low pressure turbine spool and the fan allows an increase of speed to the low pressure compressor. In the past, the speed of the low pressure turbine has been somewhat limited in that the fan speed cannot be unduly high. The maximum fan speed is at its outer tip, and in larger engines, the fan diameter is much larger than it may be in lower power engines. However, a gear reduction may be used to free the designer from compromising low pressure turbine speed in order not to have unduly high fan speeds.

It has been discovered that a careful design between the number of rotating blades, and the rotational speed of the low pressure turbine can be selected to result in noise frequencies that are less sensitive to human hearing.

A formula has been developed as follows:

$$(\text{blade count x rotational speed})/(60\ \text{seconds/minute}) \geq 4000\ \text{Hz}.$$

That is, the number of rotating blades in any low pressure turbine stage, multiplied by the rotational speed of the low pressure turbine (in revolutions per minute), divided by 60 seconds per minute (to put the amount per second, or Hertz) should be greater than or equal to 4000 Hz. In one embodiment, the amount is above 5500 Hz. And, in another embodiment, the amount is above about 6000 Hz.

The operational speed of the low pressure turbine as utilized in the formula should correspond to the engine operating conditions at each noise certification point currently defined in Part 36 or the Federal Airworthiness Regulations. More particularly, the rotational speed may be taken as an approach certification point as currently defined in Part 36 of the Federal Airworthiness Regulations. For purposes of this application and its claims, the term "approach speed" equates to this certification point.

Although the above formula only needs to apply to one row of blades in the low pressure turbine 26, in one embodiment, all of the rows in the low pressure turbine meet the above formula. In another embodiment, the majority of the blade rows in the low pressure turbine meet the above formula.

This will result in operational noise to which human hearing will be less sensitive.

In embodiments, it may be that the formula can result in a range of greater than or equal to 4000 Hz, and moving higher. Thus, by carefully designing the number of blades and controlling the operational speed of the low pressure turbine (and a worker of ordinary skill in the art would recognize how to control this speed) one can assure that the noise frequencies produced by the low pressure turbine are of less concern to humans.

This invention is most applicable to jet engines rated to produce 15,000 pounds (6,800 kg) of thrust or more

EP 3 115 577 A1

and with bypass ratios greater than about 8.0.

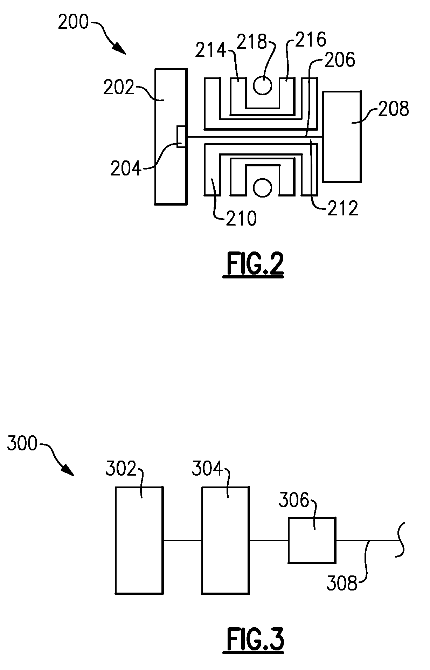

Figure 2 shows an embodiment 200, wherein there is a fan drive turbine 208 driving a shaft 206 to in turn drive a fan rotor 202. A gear reduction 204 may be positioned between the fan drive turbine 208 and the fan rotor 202. This gear reduction 204 may be structured and operate like the gear reduction disclosed above. A compressor rotor 210 is driven by an intermediate pressure turbine 212, and a second stage compressor rotor 214 is driven by a turbine rotor 216. A combustion section 218 is positioned intermediate the compressor rotor 214 and the turbine section 216.

Figure 3 shows yet another embodiment 300 wherein a fan rotor 302 and a first stage compressor 304 rotate at a common speed. The gear reduction 306 (which may be structured as disclosed above) is intermediate the compressor rotor 304 and a shaft 308 which is driven by a low pressure turbine section.

Although an embodiment of this invention has been disclosed, a worker of ordinary skill in this art would recognize that certain modifications would come within the scope of this invention. For that reason, the following claims should be studied to determine the true scope and content of this invention.

**Claims**

1.   A gas turbine engine comprising:

a fan (202), a compressor section including a compressor having a low pressure portion (210) and a high pressure portion (214), a combustor section (218), and a turbine having a downstream portion (208);
a gear reduction (204) effecting a reduction in the speed of said fan (202) relative to an input speed to said fan (202);
said downstream portion (208) of said turbine having a number of turbine blades in each of a plurality of rows of said downstream turbine portion (208), said turbine blades operating at least some of the time at a rotational speed, and said number of blades and said rotational speed being such that the following formula holds true for at least one of the blade rows of the downstream turbine
(number of blades $\times$ speed)/60$\geqq$5500; and
said rotational speed being an approach speed in revolutions per minute.

2.   The gas turbine engine as set forth in claim 1, wherein the formula results in a number greater than or equal to 6000.

3.   The gas turbine engine as set forth in claim 1 or 2, wherein said gas turbine engine is rated to produce 15,000 pounds (6,800 kg) of thrust or more.

4.   A turbine module comprising:

a turbine portion (208) having a number of turbine blades in each of a plurality of rows of said turbine portion, and said turbine portion operating at least some of the time at a rotational speed, and said number of blades and said rotational speed being such that the following formula holds true for at least one of the blade rows of the turbine portion
(number of blades $\times$ speed)/60$\geqq$5500; and
said rotational speed being an approach speed in revolutions per minute.

5.   The turbine module as set forth in claim 4, wherein the formula results in a number greater than or equal to 6000.

6.   The turbine module as set forth in claim 4 or 5, wherein said gas turbine engine is rated to produce 15,000 pounds (6,800 kg) of thrust or more.

7.   The turbine module as set forth in claim 4, 5 or 6, wherein there are three turbine rotors (216, 212, 208), and said turbine portion (208) is the most downstream of said three turbine rotors.

8.   The turbine module or gas turbine engine as set forth in any preceding claim, wherein the formula holds true for the majority of blade rows of the turbine portion (208).

9.   The turbine module or gas turbine engine as set forth in claim 8, wherein the formula holds true for all of the blade rows of the turbine portion (208).

10.  A method of designing a gas turbine engine comprising the steps of including a gear reduction (204) between a turbine portion (208) and a fan (202), and selecting the number of blades in each row of the turbine portion (208), in combination with the rotational speed of the turbine portion (208), such that the following formula holds true for at least one of the blade rows of the low pressure turbine portion:

(number of blades $\times$ speed)/60$\geqq$5500; and
said rotational speed being an approach speed in revolutions per minute.

11. The method of designing a gas turbine engine as set forth in claim 10, wherein the formula results in a number greater than or equal to 6000.

12. The method of designing a gas turbine engine as set forth in claim 10 or 11, wherein said gas turbine engine is rated to produce 15,000 pounds (6,800 kg) of thrust or more.

13. The method as set forth in claim 10, 11 or 12, wherein the formula holds true for the majority of the blade rows of the turbine portion (208).

14. The method as set forth in claim 13, wherein the formula holds true for all of the blade rows of the turbine portion (208).

EP 3 115 577 A1

FIG.1

200

202

204

214 218 216 206

208

210 212

## FIG.2

300

302 304

306

308

## FIG.3

Europäisches
Patentamt

European
Patent Office

Office européen
des brevets

# EUROPEAN SEARCH REPORT

Application Number

EP 16 17 8716

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/202403 A1 (MORIN BRUCE L [US] ET AL) 8 August 2013 (2013-08-08) * paragraphs [0016], [0029], [0031]; claims 1 - 4, 8 - 11; figure 1 * | 1-14 | INV. F02C7/36 F01D15/12 F02C3/107 |
| X | WO 2015/048214 A1 (UNITED TECHNOLOGIES CORP [US]; MTU AERO ENGINES AG [DE]) 2 April 2015 (2015-04-02) * paragraphs [0040], [0052]; claims 1 - 5 * | 1-14 | |
| X | US 2013/276424 A1 (TOPOL DAVID A [US] ET AL) 24 October 2013 (2013-10-24) * paragraphs [0032], [0044]; claims 1-3 * | 1-14 | |

TECHNICAL FIELDS SEARCHED (IPC)

F02C
F01D

The present search report has been drawn up for all claims

| Place of search | Date of completion of the search | Examiner |
|---|---|---|
| The Hague | 29 November 2016 | Mihé, Julian |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

.......................................................................................................
& : member of the same patent family, corresponding
      document

EPO FORM 1503 03.82 (P04C01)

## ANNEX TO THE EUROPEAN SEARCH REPORT
## ON EUROPEAN PATENT APPLICATION NO.

EP 16 17 8716

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2016

| Patent document cited in search report | | Publication date | Patent family member(s) | | Publication date |
|---|---|---|---|---|---|
| US 2013202403 | A1 | 08-08-2013 | CA | 2860550 A1 | 03-10-2013 |
| | | | CN | 104066932 A | 24-09-2014 |
| | | | CN | 104246132 A | 24-12-2014 |
| | | | CN | 104500439 A | 08-04-2015 |
| | | | EP | 2776678 A2 | 17-09-2014 |
| | | | EP | 2809881 A2 | 10-12-2014 |
| | | | JP | 5898337 B2 | 06-04-2016 |
| | | | JP | 2015500957 A | 08-01-2015 |
| | | | JP | 2015506441 A | 02-03-2015 |
| | | | RU | 2014134968 A | 20-03-2016 |
| | | | SG | 11201403706W A | 30-07-2014 |
| | | | US | 8246292 B1 | 21-08-2012 |
| | | | US | 2013202403 A1 | 08-08-2013 |
| | | | WO | 2013147974 A2 | 03-10-2013 |
| WO 2015048214 | A1 | 02-04-2015 | US | 2015204238 A1 | 23-07-2015 |
| | | | WO | 2015048214 A1 | 02-04-2015 |
| US 2013276424 | A1 | 24-10-2013 | NONE | | |

EPO FORM P0459

For more details about this annex : see Official Journal of the European Patent Office, No. 12/82